# EUROPEAN PATENT SPECIFICATION

(11) **EP 1 667 428 B1**
(45) Date of publication and mention of the grant of the patent: **07.08.2013**
(21) Application number: 06004614.1
(22) Date of filing: 12.10.1999
(51) Int. Cl.: H04N 5/335

(54) **Non-CCD imaging device with Time Delay Integration (TDI) mode**
Nicht-CCD-Bildgerät mit "Time Delay Integration"-Modus
Dispositif d'imagerie non-CCD avec "Time Delay Integration"

(30) Priority: 05.11.1998 GB 9824276
(43) Date of publication of application: 07.06.2006
(62) Divisional of application: 99953841.6
(73) Proprietor: Siemens Aktiengesellschaft, 80333 München (DE)
(72) Inventor: Spartiotis, Konstantinos Evangelos c/o EIP, London WC1V 6HU (GB); Jurthe, Stefan, 02600 Espoo (FI); Eraluoto, Markku Tapio c/o EIP, London WC1V 6 HU (GB)
(74) Representative: McCann, Heather Alison

(56) References cited:
- WO-A-98/16853
- GB-A- 2 323 736
- US-A- 3 683 193
- US-A- 3 746 883
- US-A- 4 779 005
- US-A- 5 315 114
- DAVIS G R ET AL: "X-ray microtomography scanner using time-delay integration for elimination of ring artefacts in the reconstructed image" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 394, no. 1-2, 11 July 1997 (1997-07-11), pages 157-162, XP004086261 ISSN: 0168-9002

## Description

This invention relates to an imaging device for scan-imaging radiation, and in particular to an imaging technique known as Time Delay Integration (TDI).

Imaging devices comprising an array of pixels of various types are known and may or may not directly allow TDI mode of operation.

Charge coupled image sensors (also known as charge coupled devices (CCDs)) form one type of known imaging device. A CCD device operates in the following way.
1. Charge is accumulated in a depletion region created by an applied voltage. For each pixel the depletion has a potential well shape and constrains electrons under one electrode gate to remain within the semiconductor substrate.
2. Voltage is applied as pulse to the electrode gate of the CCD device to clock each charge to an adjacent cell The charge remains inside the semiconductor substrate and is clocked through, pixel by pixel, to a common output. During this process no additional charge can be accumulated.

Another type of imaging device is the Active-pixel Semiconductor Imaging Device (ASID) described in International application publication number WO95/33332. The ASID comprises an array of pixels including a semiconductor substrate having an array of detector cells and a further array of pixel circuits. The detector cells generate charge in response to incident radiation. Each pixel circuit associated with a respective detector cell accumulates charge resulting from plural radiation hits of the associated detector cell. At determined times the charge from the pixel circuits can be read out and used to generate an image based on the analogue charge values stored in each pixel circuit.

A further type of imaging devices are photon counting devices (PCD) described in International application publication number WO98/16853 and incorporated herein by reference. The PCD comprises an array of pixels including a semiconductor substrate having an array of detector cells and a further array of pixel circuits. The detector cells generate charge in response to incident radiation. Each pixel circuit comprises a discriminator registering radiation hits of a preferred energy range for a respective detector cell, and an n-bit digital counter and an n-bit loadable shift-register.

The PCD works in the following way.
1. The number of registered radiation hits in the associated detector cell is counted into the n-bit digital counter.
2. In response to an external request the value of the counter is loaded into the n-bit shift register and the value of the counter is cleared.
3. All shift-registers of the entire sensor are chained and the information is clocked out in a serial fashion. Steps 1 and 3 can be executed simultaneously.

Of the afore-mentioned imaging techniques only CCD devices have been used in a TDI mode of operation since charge-shifting is an inherent feature of CCD technology.

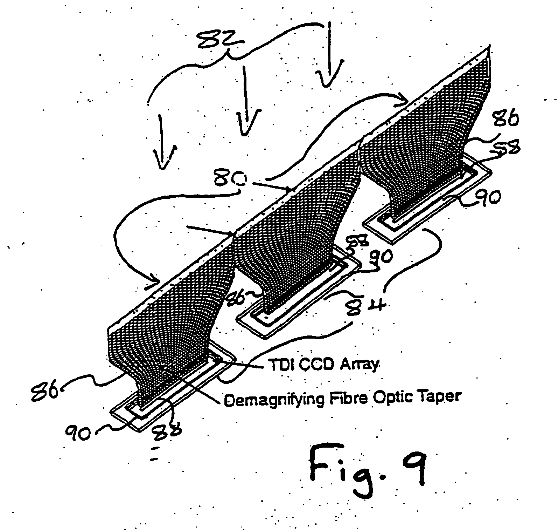

Referring to Figure 9, there will now be described a TDI CCD detector and the operation of such a detector.

Since CCDs are sensitive only to visible light, a scintillator 80, such as a phosphor, for converting high energy radiation, such as X-rays 82, into visible light must be placed in front of the CCD device 84. The scintillator 80 is generally composed of a strip of phosphor material, and is coupled to a fibre optic taper 86, which is bonded to the active region 88 of the CCD device 84. Three fibre optic tapers 86 respectively bonded to three CCD devices 84 are illustrated in Figure 9. The fibre optic tapers 86 de-magnify light collection to provide space at the taper outputs to accommodate the outer non-active regions of the CCD devices 84, yet still maintain an acceptable light collection efficiency.

In a TDI mode, image acquisition takes place by scanning a continuously active X-ray beam across an object, such as a breast for mammography applications, and correspondingly moving the detector across the object, typically at the same scanning speed as the X-ray beam. Charge collected in CCD pixels is shifted down the columns of the CCD devices 84 at a rate equal to, but in an opposite direction to, the scanning X-ray beam. The charge packets collected at the end of the CCD columns have effectively remained stationary with respect to a given path of X-rays through the object, and they comprise the integral of several charge packets in the CCD column. This is because the sensor remains active at all times and the total pixel charge on the image comes from integrating charge from multiple pixel cells as the total charge is clocked along one column. The collected charge packets are read out and typically digitised for processing into suitable images.

TDI mode imaging advantageously provides good total energy levels of imaging radiation and correspondingly good stability, yet from relatively low overall X-ray illumination. Thus, providing good imaging whilst reducing the inherent danger from high power X-ray illumination.

However, CCD imagers require indirect conversion of X-rays to light, and thus have limited absolute sensitivity and resolution. Direct radiation to electron converting substrates cannot be connected to a CCD because the small pixel charge capacity of CCDs saturates at very low doses of radiation, and cannot cope with the large currents provided by direct conversion.

US 3746883 discloses a video sensor array with a similar structure to the invention but does not disclose any TDI functionality.

US patent number US5315114 describes a TDI system for use with infra-red imaging. It describes a process in which charge generated by an infra-red detector is collected and stored at a capacitor before being transferred to a shift and store mechanism, where it is cumulatively added to charge generated by other detectors in an array.

UK patent application number GB2323736 also describes an infra-red TDI system. Charge generated at each of an array of photodiodes is collected at an associated capacitor. The charge is passed in series along a chain of such capacitors, with each photodiode being associated with a single capacitor, with each capacitor in the chain passing its charge to a succeeding capacitor before receiving charge from the preceding one.

The present invention seeks to mitigate the problems of the prior art.

In accordance with a first aspect of the invention there is provided A non-CCD imaging device for scan-imaging high energy, radiation in a Time Delay Integration (TDI) mode in accordance with claim 1.

The pixel circuit is typically operable to receive a charge from an adjacent (preceding) pixel circuit, which is loaded into the accumulation circuitry. The accumulation circuitry modifies, typically increases, the charge in accordance with radiation incident on said detector.

In a preferred embodiment the pixel circuit comprises transfer circuitry responsive to a control signal to transfer a charge value to a succeeding pixel circuit and to load a charge value from a preceding pixel circuit. Thus charge values representing radiation incident from a corresponding pixel element of an illuminated object can be accumulated and transferred along the pixel cell array, in order to track radiation originating from that pixel element.

Preferably, the signal is a charge packet and the accumulation circuitry comprises a charge collector such as a capacitor coupled to the detector. The capacitor may be a CMOS capacitor, for example associated with an FET. Such a configuration advantageously utilises the circuit technology and elements of the pixel circuits, without requiring special components.

Charge transfer is typically accomplished in at least two steps using both charge collectors in each step. The level of charge transferred is determined by a reference voltage below which the charge on the first or second charge collector cannot fall. The reference voltage is generally internally generated, and can be a gate threshold voltage for example.

The first and second switch means typically comprises transistors such as FETs or the like. The switch means are operated in anti-phase to transfer charge from first and second charge collection means, and to an adjacent pixel circuit in a sequence of steps.

In a second aspect of the invention a preferred embodiment comprises a scanning imaging system in accordance with claim 12. Suitably, the system comprises support means for said imaging device and said high energy radiation source and adapted to move said imaging device and high energy radiation source relative to an object disposed between said imaging device and high energy radiation source. Optionally, the object may move relative to the radiation source and imaging device.

In a third aspect of the invention there is provided a method for operating an imaging device for scan-imaging in a Time Delay Integration (TDI mode in accordance with claim 15

Exemplary embodiments of the invention will be described hereinafter, by way of example only, with reference to the accompanying drawings in which like elements have like numbers and in which:
Figure 1 is a schematic block diagram of an overall scan-imaging system configuration;
Figure 2 is a cross section of one example of a pixel array;
Figure 3 is a schematic block diagram of an analogue implementation of a pixel circuit of the imaging device in Figure 2;
Figure 4 is an example circuit of one stage of the pixel circuit of Figure 3;
Figure 5 is a readout configuration of an array of analogue pixel circuits;
Figure 6 is a schematic block diagram of a digital implementation of a pixel circuit of the imaging device in Figure 2;
Figure 7 is an alternative example of the counter/shift register circuitry of the pixel circuit of Figure 6;
Figure 8 is a readout configuration of an array of digital pixel circuits;
Figure 9 is a schematic illustration of a conventional TDI CCD detector
Figure 10 is a schematic illustration of an implementation of circuitry for counting plural radiation hits;
Figure 11 is a more detailed schematic illustration of the counting circuitry shown in Figure 10;
Figure 12 is a schematic illustration of circuitry for counting radiation hits within a predetermined energy range; and
Figure 13 is a schematic illustration of further circuitry for counting radiation hits within a predetermined energy range.

Embodiments of the invention may use analogue (charge) accumulation and transfer when implemented with ASID pixel circuits, and alternatively digital (photon count) accumulation and transfer when implemented with PCD pixel circuits. Both types of pixel circuits can be integrated using a standard wafer process (e.g. CMOS, NMOS, BICMOS) as well as future wafer processes.

In an analogue implementation, the pixel circuit comprises two capacitors, the first capacitor being connected to a respective detector cell. The pixel charge transfer employs additional circuitry whereby charge from the preceding pixel circuit enters into the first capacitor and leaves the cell from the second capacitor as part of an accumulated charge packet.

The charge transfer is controlled by a single clock signal. Both capacitors with respective control circuitry form two similar stages controlled by complementary clock signals making one active and one inactive. Together with the preceding and succeeding cell circuits a chain of active and inactive stages is formed e.g. along one column.

Charge transfer is realised by creating a voltage difference between two stages allowing current to flow from an active to an inactive stage and by precisely switching off the current flow as a reference voltage on the capacitor of the inactive stage is reached.

From special cells at the end of the chains (e.g. columns) the charge can be read out and used to reconstruct an image based on the charge values accumulated.

In an alternative digital implementation the pixel cell circuit comprises a discriminator responding with a pulse to a radiation hit of a desired energy threshold or range in the respective detector cell, an n-bit counter and an n-bit shift register. The inputs and outputs of the shift register are connected to the preceding and succeeding pixel circuit respectively forming a chain e.g. along one column. The counter and shift register can load in parallel from each other upon controls signals.

The TDI mode of operation in an array consisting of such cells can work in the following way:
1. Count values corresponding to radiation hits of the desired energy incident on the associated detector cell get added to the content of the counter.
2. The shift register loads the value from the counter and serial shifts it into the register of the succeeding cell circuit
3. The counter is loaded with a value from a preceding cell circuit from the shift register.

During step 2 and 3 no radiation hits can be registered, thus, the pixel is inactive but the ratio of inactive to active time may be better than 1 to 100.

From the last pixel circuit in a column the value can be read out and used to generate an image based on counted photons.

A more detailed description of embodiments of the invention will now be described.

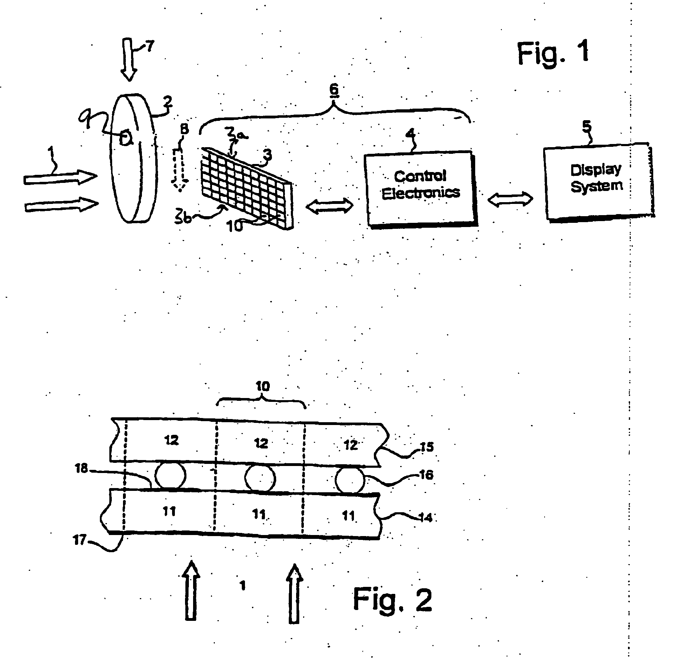

Figure 1 is a schematic block diagram of one example of a scan-imaging system using an imaging device 6 in accordance with an embodiment of the present invention. This particular example is directed to the imaging of high energy radiation, e.g. X-ray radiation. However, it will be clear to persons of ordinary skill in the art that other radiation such as gamma radiation, alpha radiation or beta radiation for example may be used.

The imaging system of Figure 1 is shown to provide imaging of an object 2 moving at scanning speed Vₒₚₜ 7 with respect to the pixel array 3 and subjected to radiation 1. The system of Figure 1 is shown with a moving object 2 in order to simplify and aid the clarity of the description of embodiments of the invention. Conventionally, the object, particularly, if it is part of the human body, is static and the X-ray source and detector move relative to the object Persons of ordinary skill in art will readily understand the principles described hereinafter and can adapt them for static objects. In this example the radiation 1 is X-ray radiation and the object 2 part of a human body. The pixel array 3 comprises a plurality of pixels 10 arranged in two dimensions. However, it will be appreciated that other embodiments may have a different configuration (e.g. a strip arrangement).

Conceptually, a region of the object 2 may be considered to be a pixel element 9. Radiation impinging on pixel element 9 irradiates an area of pixel 3 corresponding to a pixel. As the object 2 moves relative to the pixel array 3 so the radiation corresponding to pixel element 9 impinges on succeeding pixels.

The imaging device directly detects incident X-ray radiation and accumulates at each pixel a pixel image value representing incident radiation from a corresponding pixel element 9 which moves from pixel to pixel cell 10, e.g. in a row by row fashion, with a speed V_{TDI} 8 which may be the same as V_{OPT}. The pixel image value starts with a value zero at the side 3a of the pixel array where the moving object 2 enters the field of view of the pixel array 3, and is read out after it reaches the opposing side 3b of the pixel array 3 where the object leaves the field of view. As a pixel image value moves through the pixel array 3 it accumulates a plurality of radiation hits corresponding to one point of interest on the moving object 2 rather than to one pixel on the pixel array.

Referring now to Figure 2, the pixel array 3 can be configured on a single semiconductor substrate (e.g. Silicon) with each pixel cell 10 comprising a detector cell 11 and a pixel circuit 12. Alternatively, the pixel array 3 can be configured on two substrates, one with an array of detector cells and one with an array of corresponding pixels circuits, the substrates being mechanically and electrically connected by, for example, conventional bump-bonding technology or any other appropriate technology.

Figure 2 shows a schematic cross section of part of a pixel array 3. In this example, the pixel array 3 comprises a detector substrate 14 connected to a circuit substrate 15 by means of bump-bonds 16. A detector cell 11 of each pixel 10 is defined on the detector substrate 14 by a continuous electrode 17 which applies a biasing voltage and pixel location electrodes 18 to define a detection zone for the pixel 10. Corresponding pixel circuits 12 are electronically connected to the corresponding electrodes 18 by bump-bonds 16. In this manner, when charge is generated in a detector cell 11 in response to incident radiation 1, the charge is passed via bump-bond 16 to the corresponding pixel circuit 12.

The actual size of the pixel cell will depend on the application for which the imaging device is intended, and will also depend on the integrated circuit technology available for constructing the pixel circuit 12 to be described later. With current technology, it is not possible to obtain the smallest possible pixel cell sizes which would be required in some applications. Typically, the minimum pixel cell size is of the order 100µm squire using current technology which is suitable for most diagnostic and dental imaging applications. However, with advances expected in circuit manufacturing technology it is expected that the minimum size can be significantly reduced.

Accordingly, the present invention is not limited to any particular pixel cell size.

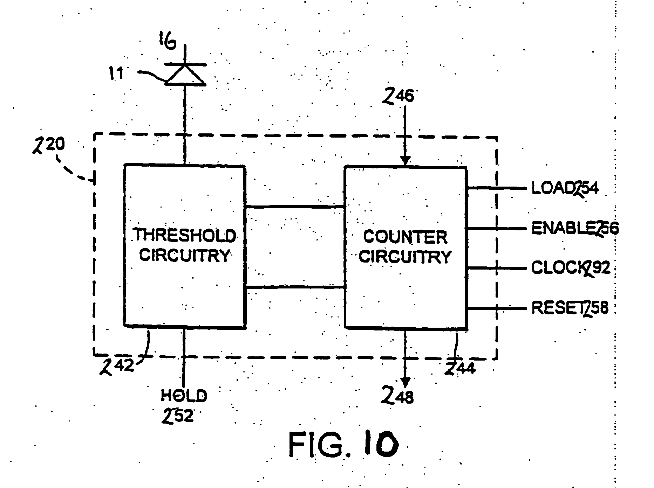

Any appropriate semiconductor material can be used for the substrates. For example, silicon may be used for the detector substrate and for the circuit substrate. Other materials could be used, e.g. the detector material could be selected from: CdZnTe, CdTe, HgI₂, InSb, GaAs, Ge, TIBr, Si and PbI₂. The detector substrate need not be limited to direct conversion materials, but could comprise CMOS circuits, on a silicon substrate, and comprising photo-diodes for receiving light from a scintillator. Optionally, amorphous silicon can be used in conjunction with a scintillator screen and pixel circuitry including an active pixel circuit 120 as described hereinafter with reference to Figure 10.

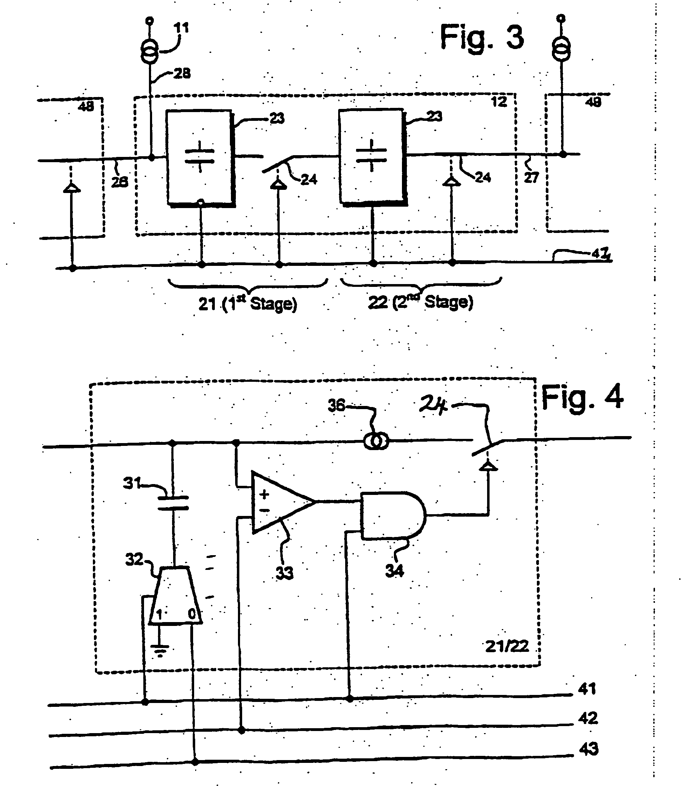

Figure 3 is a schematic block diagram of an individual pixel circuit 12 in accordance with a first embodiment of the invention using analogue circuitry The detector cell 11 is schematically represented by a radiation controlled current source in Figure 3. The input 28 to the pixel circuit 12 corresponds to the bump-bonding connection between detector cell 11 and the pixel circuit 12. A further input 26 and an output 27 furnish connections to previous 48 and succeeding 49 adjacent pixel cell circuits. Charge can be exchanged between adjacent circuits in order to provide accumulated charge packet transfer from pixel cell to pixel cell.

When a photon is photo-absorbed in the detection zone of detector cell 11 creating electrical charge, or when a radiation particle ionises a detection zone of detector cell 11, an electric charge flows into the pixel circuit 12 through input 28. The detector charge is summed with any incoming charge from the preceding pixel circuit 48 entering through input 26. The combined charge can leave the cell through output 27 and enter the succeeding pixel circuit 49.

Each pixel circuit includes two similar series connected stages 21 and 22, comprising charge storing circuitry 23 and a switch 24 at the output of the stage, which although shown here separately can form a part of the charge storing circuitry 23. The switch is typically a semiconductor switch such as an FET for example. Charge passes through both stages under the control of a clock signal 41 which closes and opens the switches 24 of stages 21 and stage 22 mutually exclusively, or in anti-phases, and also activates and deactivates the stages respectively. Thus, a packet of charge is preceded and followed by a closed switch separating charge packages from each other.

The pixel circuit functions as follows.
1) In clock state 0 for clock signal 41 the switches 24 are in the states as shown, and charge from the preceding pixel circuit 48 together with charge from the detector cell 11 enters stage 21 where it is accumulated and summed. Charge on stage 22 belongs to the previous packet and is completely transferred to the succeeding pixel circuit 49 over output line 27.
2) In clock state 1 for clock signal 41 all switches 24 are in the opposite state to that shown in Figure 3 and charge does not enter or leave pixel cell 12, instead all accumulated charge plus the charge still arriving from the detector cell 11 is transferred to stage 22.

Figure 4 shows a schematic circuit diagram for an implementation of stage 21 or 22 of Figure 3. The circuit comprises a capacitor 31 which is able to store the maximum expected pixel charge, and circuitry to manage the transfer of charge. One side of the capacitor 31 is connected to a clock controlled multiplexer 32 for switching between ground and a constant electrical potential 43 for transferring charge between two capacitors in the form of an electrical current.

The switch 24 is also controlled by the AND-gate 34, as well as clock signal 41, which closes the switch 24 at clock state 1 of clock signal 41 only if the comparison of the capacitor voltage and the reference potential 42 shows that the capacitor voltage is greater than the reference potential. Thus, only exactly the charge needed to reach reference potential on the capacitor is allowed to leave through the output.

As shown, the circuitry of Figure 4 operates as stage 21 shown in Figure 3. However, if the clock inputs of the AND-gate 34 and the multiplexer 32 are inverted, the circuitry shown in Figure 4 works as stage 22 shown in Figure 3. Depending on the type of detector substrate and the required biasing voltage, the detector produces charge or discharge whereby the input polarity of the comparator 33 has to be as shown or inverted, respectively. Also, the constant potential 43 has to be smaller or greater than the reference 42, respectively.

The current source 36 is included in the schematic diagram shown in Figure 4 to limit the current which flows during the charge transfer and make it independent from voltage drop and parasitic resistance. Therefore, the electrical potential on the capacitor 31 changes linearly improving the performance of the comparator 33. In practice, the current limitations can be provided by saturation of the switch 24.

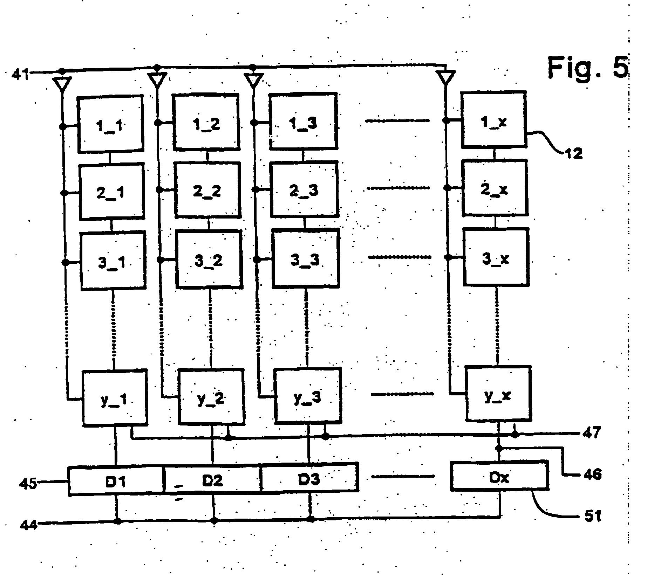

Figure 5 is a schematic illustration of an x by y pixel array 3 consisting of pixel circuits as described with reference to Figure 3, although not limited to such circuits. Cells of the y^{th} and final row are different from the other cell circuits as that they have circuitry to read out the pixel value to a common output line 47 in response to a control signal which is provided by a shift (address) register 51. The address register 51 is controlled by the readout clock 44 which has to be sufficiently faster than the transfer clock 41 to shift pixel values of the y^{th} row out before a next update of the y^{th} row. That is to say, the readout clock must have a frequency at least 2y times greater than the transfer clock 41. The readout cycle is started by an impulse of one readout clock cycle on input 45 and a similar impulse on the output 46 marks the end of the readout cycle.

Charge is accumulated and integrated at each pixel circuit location as the object 2 moves relative to the pixel array 3, and charge packets move down the array columns tracking their respective pixel element of the object 2. Eventually, the charge packets reach the y^{th} row, where they are readout before the y^{th} row is updated with the next accumulated charge packet.

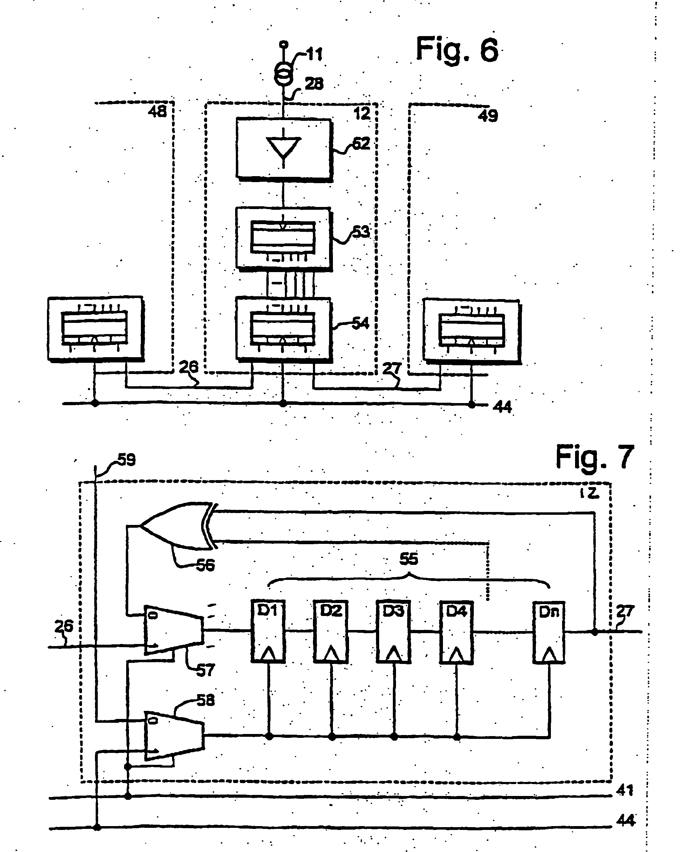

Figure 6 is a schematic illustration of a block diagram for an alternative digital variant of a pixel circuit 12 of the imaging device in Figure 2, but is not part of the invention. The pixel circuit 2 comprising a discriminator 52, an n-bit counter 53 and a n-bit shift register 54 providing a serial connection to a preceding 48 and succeeding 49 pixel circuit. The detector 11 is shown simplified as a radiation controlled current source.

When a photon is photo-absorbed in the detection zone of the detector cell 11 creating electrical charge, or when particle radiation ionises a detection zone of the detector cell 11, an electric charge flows into the pixel circuit through input 28. In response to a radiation hit of the desired energy range (e.g. excluding scattered radiation) the discriminator 52 produces a single pulse to be added to the value in the counter 53. The counter value is representative of pixel luminance or radiation energy incident for that pixel.

Referring to Figure 6, under the control of control signals (not shown) the shift register 54 is loaded in parallel with the value from the counter 53. By applying n clock cycles via the clock signal 44 the count value is serial shifted to the succeeding pixel circuit 49 over connection 27. A following control impulse loads a count value, shifted into register 54 from the preceding circuit 48, into the counter 53 and new radiation hits are accumulated and added to the value in the counter 53. For the time of the transfer cycle, i.e. transfer of count value from preceding and to succeeding circuits, the detector is inactive. However, the active time may be more than 100 times greater than the transfer time and thus the inactive period does not significantly adversely affect the operation of the detector.

The implementation of the loadable counter 53 and the loadable shift register 54 in each pixel circuit requires a considerable amount of simiconductor area. Therefore, a more efficient alternative is now described with reference to Figure 7.

Figure 7 shows a further example implementing a counter and shift register with only an n-bit shift register 55 shown in Figure 7 comprising n D type flip-flops, two multiplexers and one XOR-gate with 2 or more inputs. The circuitry shown in Figure 7 functions as follows.
1) When the control signal 41 is at state 0 the input of the shift register 55 is an XOR combination of 2 or more flip-flop states (tabs of the shift register 55) and where the discriminator signal 59 output from the discriminator 52 provides the clocking signal. In this configuration, the shift register 55 works as a pseudo-random number generator in which up to 2ⁿ -1 different combinations (2ⁿ for a binary counter) of the register value are possible dependent on the position of the tabs.
2) When the control signal 41 is at state 1 the input of the shift register 55 of pixel circuit 12 is connected to the output 26 of the shift register of the preceding pixel circuit 48, and all registers are clocked by the clock signal 44. The control signal 41 stays 1 for n clock periods of the clock signal 44 ensuring complete transfer of the counter value to the next pixel circuit. Evidently, the shift register 55 cannot be updated by discriminator signal 59 during transfer of count values from and to respective preceding 48 and succeeding 49 pixel circuits.

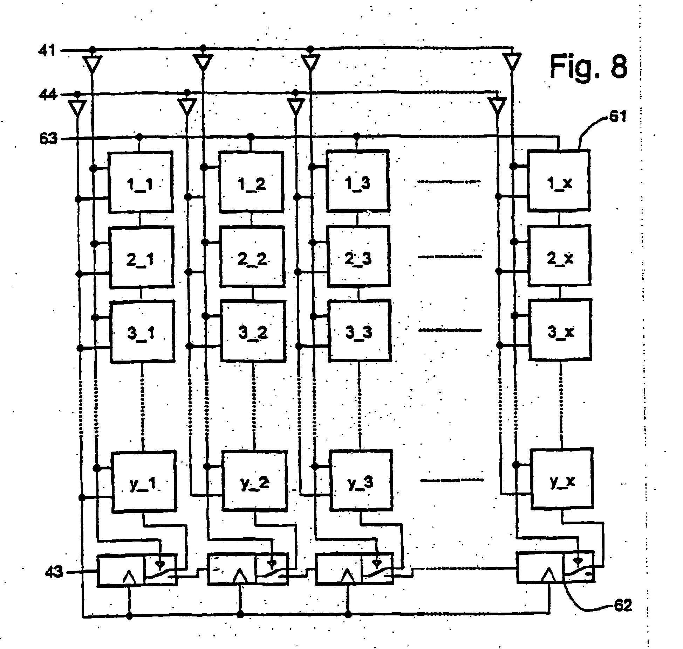

Figure 8 is a schematic illustration of an x by y array of digital pixel circuits. If binary counters are used in the pixel circuits then the inputs of the first row of pixel circuits 1_1...1_n (signal 63) are connected to logical 0 to provide an initial counter value of 0. If the counter described with reference to circuit as Figure 7 is used, the input is a logical 1 giving an initial counter value of 111 ... 1 since a starting value of 0 would dead lock the pseudo random number generator used as a counter is the circuitry illustrated in Figure 7.

The outputs of the pixel circuits m_1...m_n in the last row of the array of Figure 8 are connected to an n-bit shift register 62 which means that no transfer from the pixel cells between rows occur is connected in series over the entire row to serial shift out all the row values in the last through line 47 out of the pixel array, during the time period.

Referring now to Figure 10 there is illustrated is a schematic diagram of an individual pixel circuit 220 suitable for implementing the counter 53 of Figure 6. The pixel detector 19 is represented by the diode 11 in Figure 6. The threshold circuitry 242 effectively filters input radiation intensity by comparing the input pulse peak to one or more threshold values. The output of the threshold circuitry 242 is connected to counter circuitry 244 for counting pulse (radiation hits) within one or more predetermined ranges as defined by the threshold circuitry. The counter circuitry is connected to the shift register 54 and the shift registers of other adjacent pixel circuits for readout and count transfer purposes. Various inputs to the pixel circuit 220 include hold 252, load 254, enable 256, reset 258 and clock 292 signal lines and voltage supply lines Vdd and Vss (not shown).

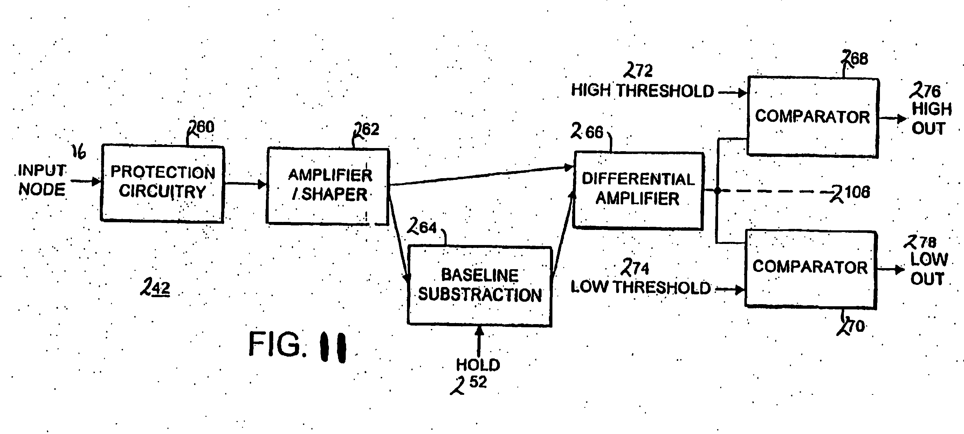

Figure 11 is a schematic block diagram of the threshold circuitry 242 represented in Figure 10. As shown in Figure 11, protection circuitry 260 is connected to the input node 16 (i.e. the bump-bond connection 234 to the pixel detector 19). The protection circuitry is provided to percent damage due to over-or-under-voltage values and is typically provided by two diodes connected to the high and low supply line Vdd and Vss (not shown). The output of the protection circuitry 260 is connected to amplifier/shaper circuitry 262 which produces an analogue signal proportional to the charge injection of a delta peak. Preferably the amplifier shaper 262 is implemented by means of a charge sensitive amplifier followed by a shaper. The shaping time depends on the maximum signal rate on a pixel. Figure 11 illustrates optional baseline subtraction circuitry which is needed if the leakage current varies significantly within the selected shaping time. Optionally, one can select the time when the baseline is sampled. In this case, the baseline is sampled outside normal measurement times.

A differential amplifier 266 subtracts the baseline so that comparators 268 and 270 see the true peak signal height. First and second comparators 268 and 270 have respective high and low threshold values 272 and 274 input thereto. The high and low threshold values can represent higher and lower limits of accepted signal amplitudes. In this case any signal peaks below the low threshold and above the high threshold will be rejected by the counter circuitry 244. If the peak signal value exceeds the high threshold value 272, then the first comparator 268 outputs a logic 1, otherwise it outputs a logic 0.

Similarly, if the peak signal value exceeds the low threshold value 274, then the second comparator 270 outputs a logic 1, otherwise it outputs a logic 0 It will be appreciated that the comparison output values form one example only and in other examples values could be output as a result of the comparisons.

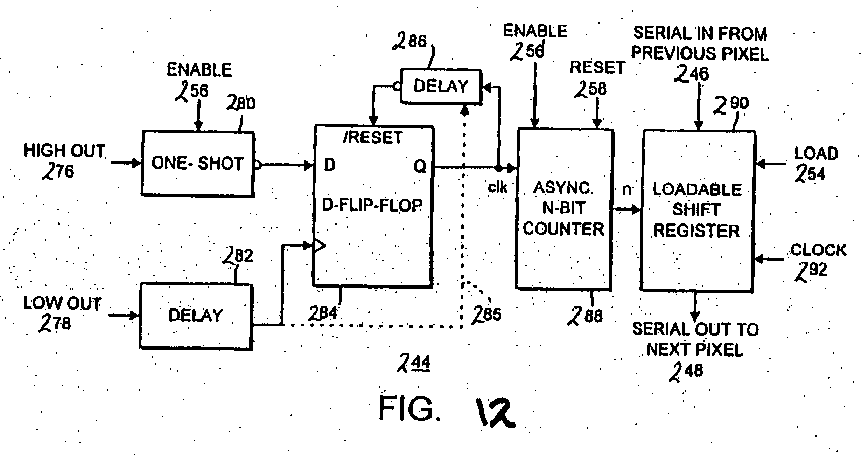

Figure 12 is a schematic block diagram of a first example of counter circuitry 244. Depending on the shaping parameters and signal amplitudes, the high output signal 276 from the first comparator 268 always comes some time later than the low output 278 from the second comparator 270. In Figure 12, the high output 276 from the first comparator 268 is supplied to a one shot circuit 280 which is responsive to the enable signal 256. The low output 278 from the second comparator 270 is supplied to a delay circuit 282. By applying a delay to the low output 278, the order of the signals 276 and 278 can be reversed so that the signal received from the delay circuit 282 at the clock input C of a D-flip-flop 284 always comes later than the inverted output of the one-shot circuit 280 which is supplied to the D input of the flip-flop 284. If the high threshold 272 was not exceeded by the input signal, the output Q of the flip-flop 284 will be set high. The output Q of the flip-flop 284 is connected via a delay 286 to a reset input RESET of the flip-flop 284 to cause the flip-flop to be reset after a delay D2 to ensure a minimum pulse length for the output "clk" signal from the Q output of the flip-flop 284. An alternative to feeding back the output Q to the delay 286 is represented by the dotted line 285 from the delay circuit 282. Although a D-flip-flop 284 is shown in Figure 12, another type of flip-flop could be used.

The length of the single-triggered one-shot circuit 280 is adequate to coincide with the rising edge from the low output signal 278 from the second comparator 270 at all signals amplitudes.

The output "clk" from the output Q of the flip-flop 284 is provided as an input to an asynchronous n-bit counter 288. According to the type of counter used, counting can be disabled with an enable signal 256 before latching an n-bit output from the counter 288 to a loadable shift register 290. The counter 288 can then be reset and the counter 288 can be enabled to proceed with counting. Reading from the pixel circuit can then be effected during the next counting period in response to the clock signal 292.

The overall operation of the triggered counter arrangements shown in Figure 12 is to cause a count to be accumulated in the counter 288 on each occasion that a signal is received in response to a radiation hit having an energy between the high and low threshold values 272 and 274.

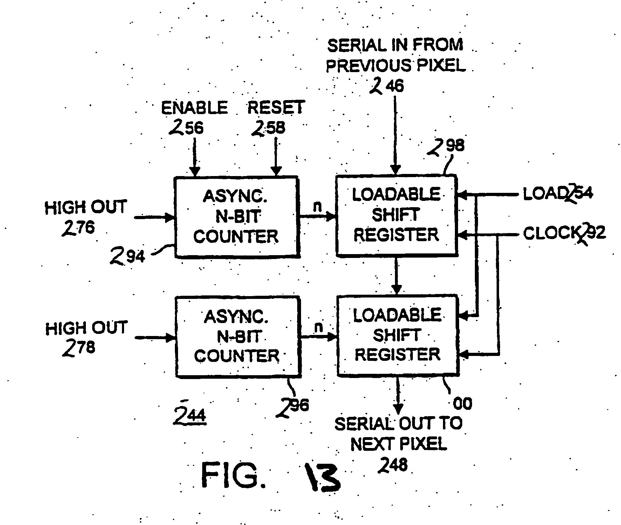

An alternative arrangement for the counter circuitry is illustrated in Figure 13. In the alternative counter circuitry shown in Figure 13, both low and high output counts are directly obtained. The circuitry requires more circuit real estate and readout time then the circuitry of Figure 11, but it does allow a direct readout of the number of counts between the thresholds by subtracting the low count from the high count and also allows the output of the number of the counts higher than the high threshold by counting the high count only.

In Figure 13, therefore, an asynchronous n-bit counter 294 is connected directly to receive the high output of the first comparator 268. An asynchronous n-bit counter 296 is connected directly to receive the output 278 of the second comparator 270. In response to load signals 254, first and second loadable shift registers 298 and 200 can be loaded with the contents of the first and second asynchronous n-bit counters 294 and 296, respectively. As with the previous example, the contents of the loadable shift registers 298 and 200 can be transferred to a succeeding pixel circuit, and be loaded with the contents of a preceding pixel circuit shift register for initialising the counters.

In view of the foregoing description it will be evident to a person skilled in the art that various modifications may be made within the scope of the invention. For example, although specific embodiments of the invention have been described with reference to Mammography, embodiments of the invention may also be used in chest x-ray radiography, Dental Panoramic Topography and Non Destructive Testing and Evaluation, for example. Additionally, the object need not move, but the radiation source and detector can move. This is particularly important for scanning parts of the human body, and in tomography the linear speed of the radiation source may not be matched by the linear TDI speed, i.e. speed of charge transfer, since it is the angular velocity of radiation source and the TDI speed which is to be kept constant. Although digital examples have been described with reference to serial coupled shift registers; it will be evident to a person of ordinary skill that the shift registers may be coupled in parallel.

## Claims

1. A non-CCD imaging device (6) for scan-imaging high energy radiation (1) in a Time Delay Integration (TDI) mode comprising an image cell array (3) including an array of detector cells (11) each comprising a direct-conversion material for directly converting incident radiation (1) into charge and a corresponding array of pixel circuits (12) each comprising accumulation circuitry for accumulating charge corresponding to incident radiation (1) on a respective detector cell (11), each pixel circuit (12) being associated with a respective detector cell (11) and controllable to transfer charge to a succeeding pixel circuit (49), each said pixel circuit (12) being operable to receive charge from a preceding pixel circuit (48), and said accumulation circuitry comprising:
a first charge collection means (23, 31) electrically coupled to a said associated detector cell (11), the first charge collection means (23, 31) being for collecting charge received from said associated detector cell (11);
a second, different, charge collection means (23, 31); and
first and second switch means (24) respectively associated with the first and second charge collection means (23, 31),
wherein the first charge collection means (23, 31) is electrically couplable to a said second charge collection means (23, 31) of a preceding pixel circuit (48) for receiving and accumulating charge from said preceding pixel circuit (48), the second charge collection means (23, 31) is electrically couplable to charge accumulation circuitry of a succeeding pixel circuit (49), and said first and second charge collection means (23, 31) are operable to transfer said charge in first and second steps utilising said first and second charge collection means (23, 31) for each step, said switch means (24) being operable in first and second configurations for transferring said charge between adjacent pixel circuits during said first and second steps respectively,
wherein the detector cell (11) is arranged to generate charge in response to incident radiation during both said first and second configurations,
wherein, in said first configuration:
the first switch means (24) of each said pixel circuit (12) is configured such that the first charge collection means (23, 31) of a given pixel circuit (12) is electrically isolated from the second charge collection means (23, 31) of the given pixel circuit (12) and the first charge collection means (23, 31) accumulates the charge generated by a respective associated detector cell (11) during said first configuration; and
the second switch means (24) of each said pixel circuit (12) is configured such that the first charge collection means (23, 31) of a given pixel circuit (12) is electrically coupled to the second charge collection means (23, 31) of a preceding pixel circuit (48) such that charge is received therefrom,
whereby each said first charge collection means (23, 31) combines charge received from the preceding pixel circuit (48) together with charge generated by and received from the respective associated detector cell (11) during said first configuration,
and, in said second configuration:
the first switch means (24) of each said pixel circuit (12) is configured such that the first charge collection means (23, 31) of a given pixel circuit (12) is electrically coupled to the second charge collection means (23, 31) of the given pixel circuit (12) such that charge combined at said first charge collection means (23, 31) during said first configuration plus charge generated by and received from the associated detector cell (11) during said second configuration is transferred to said second charge collection means (23, 31); and
the second switch means (24) of each said pixel circuit (12) is configured such that said second charge collection means (23,31) of a given said pixel circuit (12) is electrically isolated from the first charge collection means (23, 31) of a succeeding pixel circuit (49).

2. An imaging device (6) according to claim 1, wherein said pixel circuit (12) further comprises transfer circuitry responsive to a control signal to transfer charge value from said pixel circuit (12) to a succeeding pixel circuit (49) and to load a charge value from a preceding pixel circuit (48) to said pixel circuit (12).

3. An imaging device (6) according to any preceding claim, controllable to transfer said charge between pixel circuits of adjacent rows of said array of pixel circuits at a speed V_{TDI} = pixel row spacing multiplied by a transfer frequency.

4. An imaging device (6) according to claim 3, adapted to read a pixel image value corresponding to an accumulated charge from a last row of said array of pixel circuits (12) at a frequency at least equal to said transfer frequency multiplied by the number of pixel circuits (12) in said row.

5. An imaging device (6) according to any preceding claim, wherein said first and/or second charge collection means (23, 31) comprises a capacitor.

6. An imaging device (6) according to claim 5, wherein said first and/or second charge collection means (23, 31) comprises a CMOS capacitor.

7. An imaging device (6) according to claim 6, wherein said CMOS capacitor comprises a capacitance associated with an FET.

8. An imaging device (6) according to any preceding claim, wherein an amount of charge transferred between pixel circuits (12) is controllable by a voltage comparison with respect to a reference voltage.

9. An imaging device (6) according to claim 8, wherein said reference voltage is internally generated.

10. An imaging device (6) according to either of claim 8 and claim 9, wherein said reference voltage is a gate threshold voltage.

11. An imaging device (6) according to any preceding claim, wherein said high energy radiation (1) comprises as X-rays, and/or gamma rays, and/or alpha rays, and/or beta rays.

12. A scanning imaging system comprising an imaging device (6) according to any preceding claim, and further comprising control electronics for controlling said imaging device (6) and reading image information from said imaging device (6), a processor for processing said image information for display, and display means for displaying said processed information.

13. A scanning imaging system according to claim 12, further comprising a high energy radiation source disposed confronting said imaging device (6).

14. A scanning imaging system according to claim 13, further comprising support means for said imaging device (6) and said high energy radiation source and adapted to move said imaging device (6) and high energy radiation source relative to an object (2) disposed between said imaging device (6) and high energy radiation source.

15. A method for operating an imaging device (6) for scan-imaging in a Time Delay Integration (TDI) mode, said imaging device (6) comprising an image cell array (3) including an array of detector cells (11) each comprising a direct-conversion material for directly converting incident radiation (1) into charge and a corresponding array of pixel circuits (12) each comprising accumulation circuitry for accumulating charge corresponding to incident radiation on a respective detector cell (12), each pixel circuit (12) being associated with a respective detector cell (12) and controllable to transfer charge to succeeding pixel circuit (49), said method comprising receiving at a said pixel circuit (12), charge from an preceding pixel circuit (12), and said accumulation circuitry comprising:
a first charge collection means (23, 31) electrically coupled to a said associated detector cell (11), the first charge collection means (23, 31) being for collecting charge received from said associated detector cell (11);
a second, different charge collection means (23, 31); and
first and second switch means (24) respectively associated with the first and second charge collection means (23, 31),
said method comprising alternately performing first and second steps,
wherein the detector cell (11) is arranged to generate charge in response to incident radiation during both first and second steps,
wherein said first step comprises:
electrically isolating the first charge collection means (23, 31) from the second charge collection means (23, 31) of each said pixel circuit (12) such that charge generated by a respective associated detector cell (11) during said first step is accumulated at the first charge collection means (23, 31); and
receiving, at the first charge collection means (23.31), charge from the associated detector cell (11) and charge from a preceding pixel circuit (48), and accumulating the received charge,
whereby charge received from the preceding pixel circuit (48) is combined together with charge generated by and received from the respective associated detector cell (11) during said first step,
and the second step comprises:
electrically coupling the first and second charge collection means (23, 31) of the given pixel circuit (12), thereby transferring charge combined at said first charge collection means (23, 31) of the given pixel circuit (12) during said first step plus charge generated by and received from the associated detector cell (11) during said second step to the second charge collection means (23, 31) of the given pixel circuit (12); and
electrically isolating the second charge collection means (23, 31) of the given pixel circuit (12) from the first charge collection means (23, 31) of a succeeding pixel circuit (49).

16. A method according to claim 15, further comprising transferring said charge between adjacent circuits (12) at a speed V_{TDI} equal to the pixel separation multiplied by a transfer frequency.

17. A method according to claim 16, further comprising reading a charge value from a last row of said array of pixel circuits at a speed sufficient to complete said reading prior to a next update of pixel circuits (12) of said last row.

## Patentansprüche

1. Nicht-CCD-Bildgerät (6) zur Abtastabbildung von Hochenergiestrahlung (1) in einem Time Delay Integration (TDI)-Modus, aufweisend eine Bildzellenmatrix (3), die eine Matrix von Detektorzellen (11) aufweist, die jeweils ein Direktumwandlungsmaterial zum direkten Umwandeln von einfallender Strahlung (1) in Ladung und eine entsprechende Matrix von Pixelschaltungen (12) aufweisen, die jeweils eine Akkumulationsschaltungsanordnung zum Akkumulieren von Ladung aufweisen, die der einfallenden Strahlung (1) auf einer jeweiligen Detektorzelle (11) entspricht, wobei jede Pixelschaltung (12) einer jeweiligen Detektorzelle (11) zugeordnet ist und so gesteuert werden kann, dass sie Ladung an eine nachfolgende Pixelschaltung (49) überträgt, jede Pixelschaltung (12) so betrieben werden kann, dass sie Ladung von einer vorangehenden Pixelschaltung (48) empfängt, und die Akkumulationsschaltungsanordnung Folgendes aufweist:
ein erstes Ladungssammelmittel (23, 31), das elektrisch mit einer zugeordneten Detektorzelle (11) gekoppelt ist, wobei das erste Ladungssammelmittel (23, 31) zum Sammeln von Ladung ist, die von der zugeordneten Detektorzelle (11) empfangen wird;
ein zweites, verschiedenes Ladungssammelmittel (23, 31); und
erste und zweite Schaltmittel (24), die jeweils den ersten und zweiten Ladungssammelmitteln (23, 31) zugeordnet sind,
wobei das erste Ladungssammelmittel (23, 31) elektrisch mit einem zweiten Ladungssammelmittel (23, 31) einer vorangehenden Pixelschaltung (48) zum Empfangen und Akkumulieren von Ladung von der vorangehenden Pixelschaltung (48) gekoppelt werden kann, das zweite Ladungssammelmittel (23, 31) elektrisch mit einer Ladungsakkumulationsschaltungsanordnung einer nachfolgenden Pixelschaltung (49) gekoppelt werden kann, und die ersten und zweiten Ladungssammelmittel (23, 31) so betrieben werden können, dass sie die Ladung in ersten und zweiten Schritten unter Verwendung der ersten und zweiten Ladungssammelmittel (23, 31) für jeden Schritt übertragen, die Schaltmittel (24) in einer ersten und einer zweiten Konfiguration zum Übertragen der Ladung zwischen benachbarten Pixelschaltungen während der ersten bzw. zweiten Schritte betrieben werden können,
wobei die Detektorzelle (11) so ausgelegt ist, dass sie als Reaktion auf einfallende Strahlung sowohl während der ersten als auch der zweiten Konfiguration Ladung erzeugt,
wobei in der ersten Konfiguration:
das erste Schaltmittel (24) jeder Pixelschaltung (12) derart konfiguriert ist, dass das erste Ladungssammelmittel (23, 31) einer bestimmten Pixelschaltung (12) elektrisch vom zweiten Ladungssammelmittel (23, 31) der bestimmten Pixelschaltung (12) getrennt wird, und das erste Ladungssammelmittel (23, 31) die Ladung akkumuliert,
die durch eine jeweilige zugeordnete Detektorzelle (11) während der ersten Konfiguration erzeugt wird; und
das zweite Schaltmittel (24) jeder Pixelschaltung (12) derart konfiguriert ist, dass das erste Ladungssammelmittel (23, 31) einer bestimmten Pixelschaltung (12) elektrisch mit dem zweiten Ladungssammelmittel (23, 31) einer vorangehenden Pixelschaltung (48) gekoppelt wird, derart dass Ladung davon empfangen wird,
wodurch jedes erste Ladungssammelmittel (23, 31) Ladung, die von der vorangehenden Pixelschaltung (48) empfangen wird, zusammen mit Ladung kombiniert, die durch die jeweilige zugeordnete Detektorzelle (11) während der ersten Konfiguration erzeugt und von dieser empfangen wird,
und in der zweiten Konfiguration:
das erste Schaltmittel (24) jeder Pixelschaltung (12) derart konfiguriert ist, dass das erste Ladungssammelmittel (23, 31) einer bestimmten Pixelschaltung (12) elektrisch mit dem zweiten Ladungssammelmittel (23, 31) der bestimmten Pixelschaltung (12) gekoppelt wird, derart dass Ladung, die am ersten Ladungssammelmittel (23, 31) während der ersten Konfiguration kombiniert wird, und Ladung, die durch die zugeordnete Detektorzelle (11) während der zweiten Konfiguration erzeugt und von dieser empfangen wird, an das zweite Ladungssammelmittel (23, 31) übertragen werden; und
das zweite Schaltmittel (24) jeder Pixelschaltung (12) derart konfiguriert ist, dass das zweite Ladungssammelmittel (23, 31) einer bestimmten Pixelschaltung (12) elektrisch vom ersten Ladungssammelmittel (23, 31) einer nachfolgenden Pixelschaltung (49) getrennt wird.

2. Bildgerät (6) nach Anspruch 1, wobei die Pixelschaltung (12) ferner eine Übertragungsschaltungsanordnung aufweist, die als Reaktion auf ein Steuersignal einen Ladungswert von der Pixelschaltung (12) an eine nachfolgende Pixelschaltung (49) überträgt und den Ladungswert von einer vorangehenden Pixelschaltung (48) in die Pixelschaltung (12) lädt.

3. Bildgerät (6) nach einem der vorhergehenden Ansprüche, das so gesteuert werden kann, dass es die Ladung zwischen Pixelschaltungen von benachbarten Reihen der Matrix von Pixelschaltungen mit einer Geschwindigkeit V_{TDI} = Pixelreihenabstand multipliziert mit einer Übertragungsfrequenz überträgt.

4. Bildgerät (6) nach Anspruch 3, das so ausgelegt ist, dass es einen Pixelbildwert, der einer akkumulierten Ladung entspricht, aus einer letzten Reihe der Matrix von Pixelschaltungen (12) mit einer Frequenz ausliest, die mindestens gleich der Übertragungsfrequenz multipliziert mit der Anzahl von Pixelschaltungen (12) in der Reihe ist.

5. Bildgerät (6) nach einem der vorhergehenden Ansprüche, wobei das erste und/oder das zweite Ladungssammelmittel (23, 31) einen Kondensator aufweisen.

6. Bildgerät (6) nach Anspruch 5, wobei das erste und/oder das zweite Ladungssammelmittel (23, 31) einen CMOS-Kondensator aufweisen.

7. Bildgerät (6) nach Anspruch 6, wobei der CMOS-Kondensator eine Kapazität aufweist, die mit einem FET assoziiert ist.

8. Bildgerät (6) nach einem der vorhergehenden Ansprüche, wobei eine Menge von Ladung, die zwischen Pixelschaltungen (12) übertragen wird, durch einen Spannungsvergleich in Bezug auf eine Referenzspannung gesteuert werden kann.

9. Bildgerät (6) nach Anspruch 8, wobei die Referenzspannung intern erzeugt wird.

10. Bildgerät (6) nach einem von Anspruch 8 und Anspruch 9, wobei die Referenzspannung eine Gate-Schwellenspannung ist.

11. Bildgerät (6) nach einem der vorhergehenden Ansprüche, wobei die Hochenergiestrahlung (1) Röntgenstrahlen und/oder Gammastrahlen und/oder Alphastrahlen und/oder Betastrahlen aufweist.

12. Abtastabbildungssystem, aufweisend ein Bildgerät (6) nach einem der vorhergehenden Ansprüche und ferner aufweisend Steuerungselektronik zum Steuern des Bildgeräts (6) und Auslesen von Bildinformationen aus dem Bildgerät (6), einen Prozessor zum Verarbeiten der Bildinformationen zur Anzeige und Anzeigemittel zum Anzeigen der verarbeiteten Informationen.

13. Abtastabbildungssystem nach Anspruch 12, ferner aufweisend eine Hochenergiestrahlungsquelle, die gegenüber dem Bildgerät (6) angeordnet ist.

14. Abtastabbildungssystem nach Anspruch 13, ferner aufweisend Tragmittel für das Bildgerät (6) und die Hochenergiestrahlungsquelle und ausgelegt zum Bewegen des Bildgeräts (6) und der Hochenergiestrahlungsquelle in Bezug auf ein Objekt (2), das zwischen dem Bildgerät (6) und der Hochenergiestrahlungsquelle angeordnet ist.

15. Verfahren zum Betreiben eines Bildgeräts (6) zur Abtastabbildung in einem Time Delay Integration (TDI)-Modus, wobei das Bildgerät (6) eine Bildzellenmatrix (3) aufweist, die eine Matrix von Detektorzellen (11) aufweist, die jeweils ein Direktumwandlungsmaterial zum direkten Umwandeln von einfallender Strahlung (1) in Ladung und eine entsprechende Matrix von Pixelschaltungen (12) aufweisen, die jeweils eine Akkumulationsschaltungsanordnung zum Akkumulieren von Ladung aufweisen, die der einfallenden Strahlung auf einer jeweiligen Detektorzelle (12) entspricht, wobei jede Pixelschaltung (12) einer jeweiligen Detektorzelle (12) zugeordnet ist und so gesteuert werden kann, dass sie Ladung an eine nachfolgende Pixelschaltung (49) überträgt, wobei das Verfahren ein Empfangen an der Pixelschaltung (12) von Ladung von einer vorangehenden Pixelschaltung (12) aufweist, und die Akkumulationsschaltungsanordnung Folgendes aufweist:
ein erstes Ladungssammelmittel (23, 31), das elektrisch mit einer zugeordneten Detektorzelle (11) gekoppelt ist, wobei das erste Ladungssammelmittel (23, 31) zum Sammeln von Ladung ist, die von der zugeordneten Detektorzelle (11) empfangen wird;
ein zweites, verschiedenes Ladungssammelmittel (23, 31); und
erste und zweite Schaltmittel (24), die jeweils den ersten und zweiten Ladungssammelmitteln (23, 31) zugeordnet sind,
wobei das Verfahren abwechselnd erste und zweite Schritte ausführt,
wobei die Detektorzelle (11) so ausgelegt ist, dass sie als Reaktion auf einfallende Strahlung sowohl während der ersten als auch zweiten Schritte Ladung erzeugt,
wobei der erste Schritt Folgendes aufweist:
derartiges elektrisches Trennen des ersten Ladungssammelmittels (23, 31) vom zweiten Ladungssammelmittel (23, 31) jeder Pixelschaltung (12), dass Ladung, die durch eine jeweilige zugeordnete Detektorzelle (11) während des ersten Schrittes erzeugt wird, am ersten Ladungssammelmittel (23, 31) akkumuliert wird; und
Empfangen am ersten Ladungssammelmittel (23, 31) von Ladung von der zugeordneten Detektorzelle (11) und Ladung von einer vorangehenden Pixelschaltung (48), und Akkumulieren der empfangenen Ladung,
wodurch Ladung, die von der vorangehenden Pixelschaltung (48) empfangen wird, zusammen mit Ladung kombiniert wird, die durch die jeweilige zugeordnete Detektorzelle (11) während des ersten Schrittes erzeugt und von dieser empfangen wird,
und der zweite Schritt Folgendes aufweist:
elektrisches Koppeln der ersten und zweiten Ladungssammelmittel (23, 31) der bestimmten Pixelschaltung (12), um dadurch Ladung, die am ersten Ladungssammelmittel (23, 31) der bestimmten Pixelschaltung (12) während des ersten Schrittes kombiniert wird, und Ladung, die durch die zugeordnete Detektorzelle (11) während des zweiten Schrittes erzeugt und von dieser empfangen wird, an das zweite Ladungssammelmittel (23, 31) der bestimmten Pixelschaltung (12) zu übertragen; und elektrisches Trennen des zweiten Ladungssammelmittels (23, 31) der bestimmten Pixelschaltung (12) vom ersten Ladungssammelmittel (23, 31) einer nachfolgenden Pixelschaltung (49).

16. Verfahren nach Anspruch 15, ferner aufweisend ein Übertragen der Ladung zwischen benachbarten Schaltungen (12) mit einer Geschwindigkeit V_{TDI} gleich dem Pixelabstand multipliziert mit einer Übertragungsfrequenz.

17. Verfahren nach Anspruch 16, ferner aufweisend ein Auslesen eines Ladungswerts aus einer letzten Reihe der Matrix von Pixelschaltungen mit einer Geschwindigkeit, die ausreicht, um das Auslesen vor einer nächsten Aktualisierung von Pixelschaltungen (12) der letzten Reihe abzuschließen.

## Revendications

1. Dispositif d'imagerie sans DCC (6) pour imager par balayage un rayonnement de haute énergie (1) dans un mode à intégration de retard temporel (TDI) comprenant un réseau de cellules d'image (3) comprenant un réseau de cellules de détecteur (11) chacune comprenant un matériau de conversion directe afin de convertir directement un rayonnement incident (1) en une charge, et un réseau correspondant de circuits de pixels (12) comprenant chacun un circuit d'accumulation afin d'accumuler une charge correspondant au rayonnement incident (1) sur une cellule de détecteur respective (11), chaque circuit de pixel (12) étant associé à une cellule de détecteur respective (11) et commandé afin de transférer la charge vers un circuit de pixel suivant (49), chaque circuit de pixel (12) pouvant être actionné pour recevoir une charge d'un circuit de pixel précédant (48), lequel circuit d'accumulation comprend :
- un premier moyen de collecte de charge (23, 31) couplé électriquement à une cellule de détecteur associée (11), le premier moyen de collecte de charge (23, 31) permettant de collecter la charge reçue de ladite cellule de détecteur associée (11) ;
- un second moyen de collecte de charge différent (23, 31) ; et
- des premier et second moyens de commutation (24) respectivement associés aux premier et second moyens de collecte de charge (23, 31) ;
- dans lequel le premier moyen de collecte de charge (23, 31) est couplé électriquement audit second moyen de collecte de charge (23, 31) d'un circuit de pixel précédent (48) afin de recevoir et d'accumuler la charge depuis ledit pixel précédent (48), le second moyen de collecte de charge (23, 31) est couplé électriquement au circuit d'accumulation de charge du circuit de pixel suivant (49), et lesdits premier et second moyens de collecte de charge (23, 31) peuvent transférer ladite charge au cours de première et seconde étapes e utilisant lesdits premier et second moyens de collecte de charge (23, 31) pour chaque étape, ledit moyen de commutation (24) fonctionnant dans des première et seconde configurations afin de transférer ladite charge entre des circuits de pixels adjacents pendant lesdites première et seconde étapes, respectivement ;
- dans lequel la cellule de détecteur (11) est conçue pour générer une charge en réponse à un rayonnement incident dans lesdites première et seconde configurations ;
- dans lequel, dans ladite première configuration :
- le premier moyen de commutation (24) de chaque circuit de pixel (12) est conçu de sorte que le premier moyen de collecte de charge (23, 31) d'un circuit de pixel donné (12) est isolé électriquement du second moyen de collecte de charge (23, 31) du circuit de pixel donné (12), et que le premier moyen de collecte de charge (23, 31) accumule la charge générée par une cellule de détecteur associée respective (11) dans ladite première configuration ; et
- le second moyen de commutation (24) de chaque circuit de pixel (12) est conçu de sorte que le premier moyen de collecte de charge (23, 31) d'un circuit de pixel donné (12) est couplé électriquement au second moyen de collecte de charge (23, 31) d'un circuit de pixel précédent (48) de sorte que la charge soit reçue de celui-ci ;
- faisant que chaque premier système de collecte de charge (23, 31) combine la charge reçue du circuit de pixel précédent (48) à la charge générée par et reçue de la cellule de détecteur associée respective (11) dans ladite première configuration ;
- et dans ladite seconde configuration :
- le premier moyen de commutation (24) de chaque circuit de pixel (12) est conçu de sorte que le premier moyen de collecte de charge (23, 31) d'un circuit de pixel donné (12) est couplé électriquement au second moyen de collecte de charge (23, 31) du circuit de pixel donné (12) de sorte que la charge combinée audit premier moyen de collecte de charge (23, 31) dans ladite première configuration plus la charge générée par et reçue de la cellule de détecteur associée (11) dans ladite seconde configuration soient transférées vers ledit second moyen de collecte de charge (23, 31) ; et
- le second moyen de commutation (24) de chaque circuit de pixel (12) est conçu de sorte que ledit second moyen de collecte de charge (23, 31) d'un circuit de pixel donné (12) soit électriquement isolé du premier moyen de collecte de charge (23, 31) d'un circuit de pixel suivant (49).

2. Dispositif d'imagerie (6) selon la revendication 1, dans lequel ledit circuit de pixel (12) comprend en outre un circuit de transfert réagissant à un signal de commande afin de transférer une valeur de charge dudit circuit de pixel (12) vers un circuit de pixel suivant (49) et de charger une valeur de charge depuis un circuit de pixel précédent (48) vers ledit circuit de pixel (12).

3. Dispositif d'imagerie (6) selon l'une quelconque des revendications précédentes, commandé de manière à transférer ladite charge entre des circuits de pixels de rangées adjacentes dudit réseau de circuits de pixels à une vitesse V_{TDI} = espacement de rangées de pixels multiplié par une fréquence de transfert.

4. Dispositif d'imagerie (6) selon la revendication 3, conçu pour lire une valeur d'image de pixel correspondant à une charge accumulée depuis une dernière rangée dudit réseau de circuits de pixels (12) à une fréquence au moins égale à ladite fréquence de transfert multipliée par le nombre de circuits de pixels (12) dans ladite rangée.

5. Dispositif d'imagerie (6) selon l'une quelconque des revendications précédentes, dans lequel lesdits premier et/ou second moyens de collecte de charge (23, 31) comprennent un condensateur.

6. Dispositif d'imagerie (6) selon la revendication 5, dans lequel lesdits premier et/ou second moyens de collecte de charge (23, 31) comprennent un condensateur CMOS.

7. Dispositif d'imagerie (6) selon la revendication 6, dans lequel ledit condensateur CMOS comprend une capacitance associée à un FET.

8. Dispositif d'imagerie (6) selon l'une quelconque des revendications précédentes, dans lequel une quantité de charge transférée entre des circuits de pixels (12) est commandée par une comparaison de tension par rapport à une tension de référence.

9. Dispositif d'imagerie (6) selon la revendication 8, dans lequel ladite tension de référence est générée en interne.

10. Dispositif d'imagerie (6) selon la revendication 8 ou la revendication 9, dans lequel ladite tension de référence est une tension seuil de grille.

11. Dispositif d'imagerie (6) selon l'une quelconque des revendications précédentes, dans lequel ledit rayonnement haute énergie (1) comprend des rayons X et/ou des rayons gamma et/ou des rayons alpha et/ou des rayons beta.

12. Système d'imagerie par balayage comprenant un dispositif d'imagerie (6) selon l'une quelconque des revendications précédentes, comprenant en outre une électronique de commande afin de commander ledit dispositif d'imagerie (6) et de lire des informations dudit dispositif d'imagerie (6), un processeur pour traiter lesdites informations d'image en vue de l'affichage, et un moyen d'affichage afin d'afficher lesdites informations traitées.

13. Système d'imagerie par balayage selon la revendication 12, comprenant en outre une source de rayonnement haute énergie disposée en face dudit dispositif d'imagerie (6).

14. Système d'imagerie par balayage selon la revendication 13, comprenant en outre un moyen de support pour ledit dispositif d'imagerie (6) et ladite source de rayonnement haute énergie, et conçu pour déplacer ledit dispositif d'imagerie (6) et ladite source de rayonnement haute énergie par rapport à un objet (2) disposé entre ledit dispositif d'imagerie (6) et ladite source de rayonnement haute énergie.

15. Procédé d'actionnement d'un dispositif d'imagerie (6) pour imagerie par balayage dans un mode à intégration de retard temporel (TDI), ledit dispositif d'imagerie (6) comprenant un réseau de cellules d'image (3) comprenant un réseau de cellules de détecteur (11) chacune comprenant un matériau de conversion directe afin de convertir directement un rayonnement incident (1) en une charge, et un réseau correspondant de circuits de pixels (12) comprenant chacun un circuit d'accumulation afin d'accumuler une charge correspondant au rayonnement incident sur une cellule de détecteur respective (12), chaque circuit de pixel (12) étant associé à une cellule de détecteur respective (12) et commandé afin de transférer la charge vers un circuit de pixel suivant (49), lequel procédé consiste à recevoir audit réseau de pixels (12) une charge provenant d'un circuit de pixel précédent (12), et lequel circuit d'accumulation comprend :
- un premier moyen de collecte de charge (23, 31) couplé électriquement à une cellule de détecteur associée (11), le premier moyen de collecte de charge (23, 31) permettant de collecter la charge reçue de ladite cellule de détecteur associée (11) ;
- un second moyen de collecte de charge différent (23, 31) ; et
- des premier et second moyens de commutation (24) respectivement associés aux premier et second moyens de collecte de charge (23, 31) ;
- lequel procédé consiste à effectuer alternativement les première et seconde étapes ;
- dans lequel la cellule de détecteur (11) est conçue pour générer une charge en réponse à un rayonnement incident dans lesdites première et seconde étapes ;
- dans lequel la première étape consiste à :
- isoler électriquement le premier moyen de collecte de charge (23, 31) du second moyen de collecte de charge (23, 31) de chaque circuit de pixel (12) de sorte que la charge générée par une cellule de détecteur associée (11) pendant ladite première étape soit accumulée au niveau du premier moyen de collecte de charge (23, 31) ; et
- recevoir au niveau du premier moyen de collecte de charge (23, 31) une charge de la cellule de détecteur associée (11) et une charge du circuit de pixel précédent (48), et accumuler la charge reçue ;
- la charge reçue du circuit de pixel précédent (48) étant combinée à la charge générée par et reçue de la cellule de détecteur associée respective (11) pendant la première étape ;
- et la seconde étape consiste à :
- coupler électriquement les premier et second moyens de collecte de charge (23, 31) du circuit de pixel donné (12) de manière à transférer la charge combinée audit premier moyen de collecte de charge (23, 31) du circuit de pixel donné (12) pendant ladite première étape plus la charge générée par et reçue de la cellule de détecteur associée (11) pendant ladite seconde étape vers le second moyen de collecte de charge (23, 31) du circuit de pixel donné (12) ; et
- isoler électriquement le second moyen de collecte de charge (23, 31) du circuit de pixel donné (12) du premier moyen de collecte de charge (23, 31) d'un circuit de pixel suivant (49).

16. Procédé selon la revendication 15, consistant en outre à transférer ladite charge entre des circuits adjacents (12) à une vitesse V_{TDI} = séparation des pixels multiplies par une fréquence de transfert.

17. Procédé selon la revendication 16, consistant en outre à lire une valeur de charge depuis une rangée dernière dudit réseau de circuits de pixels à une vitesse suffisante pour effectuer ladite lecture avant une prochaine mise à jour des circuits de pixel (12) de ladite dernière rangée.
